# EUROPEAN PATENT APPLICATION

(11) **EP 4 459 979 A1**
(43) Date of publication of application: **06.11.2024**
(21) Application number: 24173594.3
(22) Date of filing: 30.04.2024
(51) Int. Cl.: H04N 7/15, G06N 3/044, G06V 10/82, G06V 40/16, G10L 25/63

(54) **MULTI-MODAL DATA-STREAM-BASED ARTIFICIAL INTELLIGENCE INTERVENTIONS IN A VIRTUAL ENVIRONMENT SYSTEM AND METHOD**

(30) Priority: 02.05.2023 US 202318142302
(71) Applicant: TMRW Foundation IP SARL, 2310 Luxembourg (LU)
(72) Inventor: BLACK, Robert Harry, Wirral, CH47 4BB (GB); PALOMINA, Stefanie, 10115 Berlin (DE); YERLI, Cevat, Dubai (AE)
(74) Representative: Dentons UK and Middle East LLP

(57) **Abstract**

Embodiments of this disclosure include systems and methods for an improved video conferencing system in a virtual environment. Embodiments can use artificial intelligence, large language models, and machine learning to detect empathy and emotion within a group of participants in the virtual conference. Various inputs, such as audio/visual streams, other sensor data, and training sets may be used to detect various emotional scenarios, such as boredom, happiness, and sadness. Embodiments may detect such scenarios and take an intervention based on a desired behavioral change in the participants, such as encouraging more participation or waking people up. The intervention may be a change in camera perspective or an environmental change to the virtual environment. The intervention may also depend on the contextual scenario, *e.g.,* a serious business meeting versus a gathering of friends.

## Description

### TECHNICAL FIELD

The present disclosure relates to creating contents in computing environments, more particularly, to systems and methods for enhancing video conferencing technology using artificial intelligence (AI). AI may be used to develop a more engaging experience by producing a more interactive viewing experience beyond the typical grid of speakers or focus on the speaker.

### BACKGROUND

Video conferencing has become an essential tool for communication and collaboration in today's world. However, the traditional format of video conferences often results in unengaging and unproductive meetings, leading to a lack of interest and attention from participants. Boring video conferences may result in decreased collaboration and communication among team members, as well as decreased productivity and efficiency in achieving meeting objectives. Therefore, there is a need to improve video conferencing to make it more interesting and engaging for participants. This may be achieved through the development of innovative technologies and features that enhance the user experience and encourage active participation, resulting in more productive and successful meetings.

The limitations of traditional video conferencing formats have become more apparent as remote work and virtual collaboration have become increasingly common. Participants often struggle to maintain focus and engagement during lengthy or unstructured meetings, leading to decreased productivity and missed opportunities for collaboration and problem-solving.

Moreover, the lack of face-to-face interaction and nonverbal emotional cues may make it difficult for participants to build rapport and establish trust, leading to potential misunderstandings and conflicts. This highlights the need for new approaches to video conferencing that foster more dynamic and interactive communication among participants.

In response to these challenges, there has been a growing demand for innovative video conferencing technologies that may improve the overall meeting experience. Some of these technologies include virtual backgrounds, augmented reality overlays, interactive whiteboards, and real-time collaboration tools. These features may help to engage participants, facilitate more meaningful conversations and collaborations, and ultimately enhance productivity and decision-making.

As such, there is a clear need for continued investment and development in video conferencing technology to make it more engaging, interactive, and productive. By doing so, we may improve the virtual meeting experience and foster better communication, collaboration, and problem-solving among participants in remote or hybrid work environments.

### SUMMARY

Frequent online meetings can turn dull and repetitive, reducing motivation to participate in such meetings. This is because humans are naturally emotional beings and tend to enjoy variety and there are many types of stimuli that can achieve this. However, current technologies enabling communications in virtual environments focus mostly on providing enough technical capabilities to enable a smooth user experience, such as by allowing suitable FPS, sound quality or graphics quality. Therefore, there is a need to develop technological alternatives that enable stimulating the range of human emotions to improve the energy, attention span, motivation and even productivity of users as they interact in virtual environments. Virtual environments may include indoor environments, such as an office or a restaurant, and outdoor environments, such as park or farm.

Prior art solutions provide few basic building blocks that do not provide a cohesive solution to generating an engaging video conference or virtual conference. Video conferences are well known in the art, with applications such as Zoom and Teams. However, a virtual conference could include traditional video conferences and also more elaborate virtual environments that emulate real-world scenarios, such as a restaurant or a conference room. Some embodiments of this disclosure provide an improved automated responsive AI logic based on dynamic info tailored for affecting the mood of an event by processing inputs into desired outputs. Embodiments may include a multi-modal data stream-based AI camera system and method that processes a plurality of inputs into outputs. The inputs may be sound or video feeds of users provided by their corresponding cameras and microphones as the users participate in virtual events. Further inputs may be captured by one or more virtual broadcasting cameras in the virtual environment. Each user has a user graphical representation, or avatar, in the form of the camera feed of him or herself that is presented in the virtual environment. The background of the camera feed with the user may have its background removed, so that the avatar is only a cutout of the user that is sent in realtime to the virtual environment. The system comprises a server storing the virtual environment and is configured to process and distribute received camera feeds from a plurality of participants. The system may use a WebRTC architecture using schemes such as P2P, client-server, or combinations thereof, as discussed in US patent no. 11,218,522.

Virtual environments provide the opportunity for users to meet remotely and interact. When interacting in such virtual environments, users may need to actively adjust their camera view to be able to follow the action in the virtual environment. For example, in a round table with many users, when shifting turns from one speaker to another, users may need to make one or more movements to adjust their camera view to be able to see the new speaker. Patent application no. 17/060,516 by Yerli, which is incorporated by reference in its entirety herein, proposes a virtual broadcasting camera that may be used to capture action in the virtual environment that may be directly seen by users. However, for that case, a client device is required to manage the virtual broadcasting camera, also requiring manual effort of a person.

Apart from capturing live action that is provided to users, footage taken by virtual cameras such as a virtual broadcasting camera may be further used for creating replays of real or virtual events. Typical methods require video streams to be sent to a storage device in a server so that a controller reviews and manually selects and/or edits shots that may be of interest for an audience, involving a lot of effort. Finally, typical virtual events follow a certain predefined order that may make meetings dull and monotonous, all of which is exacerbated by the remote nature of such events, leading to fatigue and boredom.

According to certain aspects of the present disclosure, systems and methods are provided for a multi-modal data stream-based AI camera system that processes a plurality of inputs into outputs. The input may be camera and audio feeds shared by users with the virtual environment. The system comprises a server storing the virtual environment and is configured to process and distribute received camera feeds from a plurality of participants. The system allows the configuration of various possible outputs depending on the received inputs. The system further uses presets, or contextual scenarios, to allow for the programmatic selection of outputs and/or to modify the outputs. The outputs may be presented in the virtual environment in one or more surfaces thereof, *e.g.,* in a virtual screen of the virtual environment where the event is being broadcasted and may be configured to generate a more engaging virtual environment. The camera outputs may take the form of one or more of a live, unmodified camera feed; a feed of realtime camera adjustments; or replays of scenes, *e.g.,* for producing a "best of including the most relevant scenes of an event.

For example, if the system detects emotional cues that a participant is expressing enthusiasm and excitement, it may adjust the mood of the event to match this emotion. This may be done by adjusting the lighting and sound effects, changing the speakers tone and body language, and adjusting the pace of the conversation. Similarly, if the system detects that a participant is feeling bored or disengaged, it may adjust the mood to inject more energy and excitement into the conversation.

A user's emotional cues may be based on several factors, such as body language, facial expressions, tone of voice, and word choice. Below are examples of emotional cues:
Body Language
   - Crossed arms or legs may indicate defensiveness or discomfort.
   - Leaning forward can indicate interest or engagement.
   - Fidgeting or tapping can indicate nervousness or impatience.
   - Slouching or avoiding eye contact can indicate disinterest or discomfort.
   - Open and relaxed body posture can indicate confidence and ease.
Facial Expressions:
   - Smiling can indicate happiness or friendliness.
   - Frowning or furrowing brows can indicate sadness or anger.
   - Raised eyebrows can indicate surprise or interest.
   - Tightened jaw or lips pressed together can indicate anger or tension.
   - Squinting or narrowing eyes can indicate suspicion or disbelief.
Tone of Voice:
   - High-pitched or shaky voice can indicate nervousness or fear.
   - Monotone voice can indicate boredom or disinterest.
   - Loud or raised voice can indicate anger or frustration.
   - Soft and slow voice can indicate sadness or concern.
   - Fast and energetic voice can indicate excitement or enthusiasm.
Word Choice:
   - Positive words such as "amazing," "fantastic," and "great" can indicate happiness or enthusiasm.
   - Negative words such as "terrible," "awful," and "disappointing" can indicate anger or disappointment.
   - Neutral words or phrases such as "interesting," "okay," or "whatever" can indicate disinterest or indifference.
   - Words or phrases that reflect personal experience, such as "I feel" or "in my opinion," can indicate a personal emotional response.
Data sets may be trained to teach a neural network to recognize these emotional cues.

The use of machine learning to detect emotions may also enhance the naturality and spontaneity of virtual events. In face-to-face conversations, participants naturally adjust their tone, body language, and speech patterns based on the emotions of the other participants. By using machine learning to detect emotions, the system may replicate this natural behavior in virtual events. The system may analyze the emotions of the participants and adjust the conversation to reflect these emotions, creating a more natural and spontaneous conversation. Embodiments may use additional inputs, such as whether people are speaking, whether people are using hand gestures and the type of those gestures, body language, or other inputs received from keyboards or other sensors, such as tactile, pressure, temperature, humidity, light, heartbeat, *etc.* Additional information that embodiments may process is how a user is interacting with or moving in a virtual environment.

Still further inputs may include so-called "dead" information, such as the background audio and the video information that is cropped by the cutout process. There could be security or privacy concerns, which could be remedied by certain opt-in requirements or other legal means. A noise cancellation process could be used to extract or enhance the foreground or key voice, and categorize and segment other sounds.

Each of these inputs may be analyzed, modeled, and processed in different ways and at different intervals to help choose interventions intended to drive behavior in the virtual environment of the virtual conference. For example, if somebody has a dog barking in their background, an extraction algorithm of the system would recognize this and have a short list of criteria. The system could then add a video/animated 3D model of a dog in scene outside of the window. Or if they have the kettle on, a kettle in the room could start producing steam. Or if it is prayer time, golden lights could go in the sky. The cause and effect do not have to be direct or literal. They can be cumulative or combinatorial. For example, if two or three users have Teams notifications go off at the same time, the scale of the 3D object representing the sound could change. Or if there is an increasing hoovering noise, a robotic vacuum could start moving closer to the user generating the sound. An object in the room can represent the cumulative background noise level in the room in novel and artistic ways, such as ripples of water on a sphere, fireworks outside or subtle shaking of the fixtures/furnishings.

For video background information, there could be a similar process. If somebody has a cup on their desk, this could be simulated into the real scene. If they have green curtains behind them, one of the accent details of the virtual environment could change. If it is sunny out of their window, the weather outside the 3D room could change. Again it can be combinatorial. So if it is sunny in location A and cloudy in location B, there can be sun shining through the clouds or a rainbow. Or there can be a shared bookshelf or art wall in the virtual environment that consolidates the reading matter and background picture tastes of all the people in there. Further, if somebody has a background painting of a beach, the virtual environment's background could become a beach scene. If they have a star trek poster, the background could be space *etc.*

More generally, if their lighting is changing between two thresholds, the virtual environment could match this behavior. If they have a piece of art in the background, this could be identified and applied to their personal virtual environment. Or if they're wearing a brand or using technology with a brand, this could be de-branded/blurred. If they have a book on their bookshelf, this could be imported and linked for the others to see, instead of pasting a URL in the chat. If they hold an object up to the camera, this recognition process can help remove the friction of digitizing the analog information using, for example, OCR to AI segmentation.

Embodiments may also use, for example, neural radiance fields to recreate a 3D space using one or more 2D images. For example, someone could point their phone at a chessboard and a matching 3D, playable chessboard could appear on a table in the virtual environment.

In virtual events, such as virtual conferences or webinars, it may be challenging to replicate the natural flow and mood of face-to-face conversations. However, by using machine learning to detect emotions, the system may simulate lifelike natural conversations effortlessly and in an easy manner. Overall, the use of machine learning to detect emotions may have significant benefits in increasing the dynamism, naturality, spontaneity, excitement, and energy of virtual events. The system may analyze the emotions of the participants in real-time and adjust the tone and mood of the event accordingly, creating a more engaging and dynamic experience. By replicating the natural behavior of face-to-face conversations, the system may also enhance the naturality and spontaneity of virtual events.

Embodiments include methods and systems for running an interactive virtual conference platform that stores a plurality of virtual environments in one or more virtual environment systems. The platform may also store a plurality of contextual scenarios, such as a business meeting or a party. Emotional cues may also be stored by the platform. The platform may receive a plurality of requests to join a virtual conference. The participants may connect to the virtual conference by connecting sessions comprising video and audio streams together. The platform may include a server to analyze the plurality of video or audio streams using one or more neural networks. The analysis may automatically detect a contextual scenario of the plurality of contextual scenarios or one or more emotional cues from the input data. Based on the analyzed input data, the system and method may select an intervention from an intervention database based on the analyzed input data, the detected contextual scenario or the detected emotional cue. Next, the platform may read the intervention from an intervention database. After reading the intervention, the platform may intervene in the virtual conference based on the intervention read from the intervention database. The intervention may include at least one change to an output audio signal or an output video signal.

In some embodiments, the input data further comprises one or more of typing speed, typing volume (cancellation), hand gestures, amount of speaking time, facial (micro) expressions, mouse/swipe velocity, geographic location, browser, loading time, FPS/tab focus, meeting title, number of participants, head position, language toxicity, device, or rhythms of speech.

In some embodiments, the platform further comprises a configuration application that allows for setting up certain options of the platform. For example, the configuration application may be configured to allow for the selection of the intervention independent of the contextual scenario where the participants interact. In another example, the configuration application may be configured to allow for the selection of the intervention based on the input data in relation to the contextual scenario. In this example, the input data in the specific contextual scenario may result in a different intervention depending on the contextual scenario. For instance, if a participant raises his hand in a questionnaire reality show type of contextual scenario, the platform may select an intervention of spotlighting the participant and playing a certain music, but a participant raising his hand in a business contextual scenario, the platform may select an intervention of only redirecting a virtual camera angle to the participant and lowering the microphone of all other participants without playing music or spotlighting the participant.

The platform may also receive inputs comprising one or more data sets corresponding to the plurality of contextual scenarios into one or more neural networks. The one or more neural networks may comprise one or more of a convolutional neural network (CNN) and a recurrent neural network (RNN).

They system may be configured to receive feedback on the intervention and apply the feedback to the one or more neural networks to train the one or more neural networks to apply to future interventions. The feedback may comprise a ranking from at least one user or a physical reaction from one or more users detected via the video or audio streams.

The intervention may include a change to a virtual camera angle, a shot size, or a virtual camera motion. The intervention may also include changing a brightness of the output video signal, changing a tone of the output audio signal, or changing a tint of the output video signal.

The intervention may also include summarizing events taking place in the virtual environment by selecting the most interesting scenes of the event to create a summary thereof. In this embodiment, the recordings may be made through one or more virtual broadcasting cameras in the event capturing a broad range of data. The may be presented on one or more surfaces of the virtual environment, such as on screens of the virtual environment or projected on one or more of its walls.

Embodiments may also include reading selecting the intervention based on one or more user profiles. The user profiles may include one or more user settings correlating contextual scenarios with preselected intervention criteria.

In further embodiments, the user profile comprises data related to the learning style of users, wherein the intervention comprises adjusting the presentation of data to the users based on the user learning style to facilitate learning. In yet further embodiments, the platform is configured to read the user feedback and adjust the data presentation based on the user feedback. In other embodiments, the platform is configured to classify users with a similar learning style and accordingly cluster the data for presentation to users under the same classification to facilitate group learning.

Further embodiments may include a plurality of client-side video conferencing applications and an interactive video conferencing platform configured to receive one or more of a video stream or an audio stream from the plurality of client-side video conferencing applications. The interactive video conferencing platform may analyze the one or more video streams or audio streams and detect a contextual scenario based on that analysis. These embodiments may also include an intervention database including a plurality of interventions, and based on detecting the contextual scenario, the embodiments may read and implement an intervention corresponding to the contextual scenario. These embodiments may also include an output signal including an output audio signal or an output video signal, wherein the interactive video conferencing platform is configured to modify the output signal based on the intervention corresponding to the contextual scenario. Interventions may include changes to one or more camera views and environmental changes.

Embodiments may also include various non-transitory computer-readable media including instructions capable of being performed on a processor. One instruction may be to connect a plurality of users to a virtual conference based on a plurality of requests to join the virtual conference, wherein each session comprises one or more video or audio streams, which collectively form a plurality of video or audio streams. A further instruction may be to analyze the plurality of video or audio streams to detect a contextual scenario from a plurality of contextual scenarios stored in a scenario database. The instructions may also include an instruction to detect automatically a contextual scenario of the plurality of contextual scenarios stored in the scenario database. After detection, the media may select an intervention from an intervention database based on the contextual scenario. After selection, there may be an instruction to read the intervention based on the contextual scenario from the intervention database. Then, after reading the intervention, the media may contain an instruction to intervene in the virtual conference based on the intervention read from the intervention database, wherein the intervention comprises at least one change to an output audio signal or an output video signal.

The foregoing general description and the following detailed description are examples and explanatory only and are not restrictive of the invention, as claimed.

### BRIEF DESCRIPTION OF THE DRAWINGS

The accompanying drawings, which are incorporated in and constitute a part of this specification, illustrate exemplary aspects of the disclosure and together with the description, explain the principles of the present disclosure.
FIG. 1 illustrates an overview of an example environment in which systems, methods, and other aspects of the present disclosure may be implemented.
FIG. 2 illustrates a generic example of a process flow 200 of the current system and method.
FIG. 3 illustrates an example process for making an intervention in accordance with some embodiments.
FIG. 4 illustrates an example flowchart of an exemplary method of making interventions using artificial intelligence in a computing environment, according to aspects of the present disclosure.
FIG. 5 illustrates an example model using artificial intelligence in a computing environment, according to aspects of the present disclosure.
FIG. 6 illustrates an example virtual broadcasting environment, according to aspects of the present disclosure.
FIG. 7A illustrates example inputs and outputs according to aspects of the present disclosure.
FIG. 7B illustrates additional example inputs and outputs according to aspects of the present disclosure.
FIG. 8 illustrates a plurality of potential AI camera scenarios 800 of certain embodiments of the present disclosure.
FIG. 9 illustrates an example flow chart according to certain embodiments of the present disclosure.
FIG. 10 illustrates an example environmental intervention flow according to certain embodiments of the present disclosure.
FIG. 11 illustrates an example system of components capable of performing instructions for methods of various embodiments of the present disclosure

### DETAILED DESCRIPTION

The following embodiments describe systems and methods for generating a more engaging virtual conference presentation. Current virtual conferences are relatively static and dull because they provide either a single video feed of a speaker or boxes with several attendees all at once. Embodiments of the present disclosure may allow for different camera effects or other interventions to produce a more engaging presentation.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter may be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The term "or" is meant to be inclusive and means either, any, several, or all the listed items. The terms "comprises," "comprising," "includes," "including," or other variations thereof, are intended to cover a non-exclusive inclusion such that a process, method, or product that comprises a list of elements does not necessarily include only those elements but may include other elements not expressly listed or inherent to such a process, method, article, or apparatus. Relative terms, such as, "substantially" and "generally," are used to indicate a possible variation of ±10% of a stated or understood value.

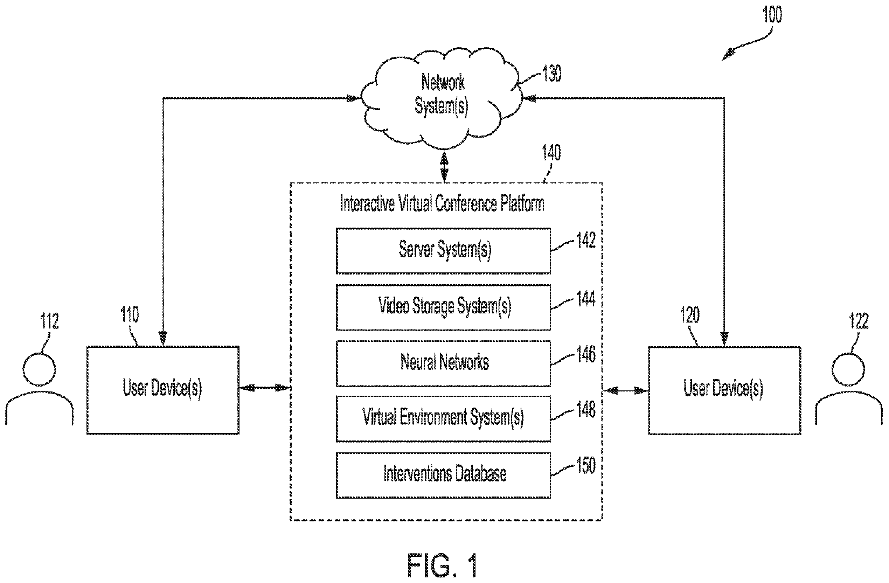

Referring now to the appended drawings, FIG. 1 shows an overview of an example environment (or system(s)) 100, according to one or more embodiments of the present disclosure. The environment 100 may include, for example, a first user device(s) 110 and a second user device(s) 120, which are configured to communicate with a network system(s) 130 and a collaborative interactive video conferencing platform 140. Although two user device(s) 110 and 120 are shown in the environment 100, additional user devices may be provided in the environment 100 to communicate with the network system(s) 130 and/or collaborative interactive video conferencing platform 140, synchronously or asynchronously, and to participate in the collaborative content creation of multiple users, in accordance with the present disclosure.

According to aspects of the present disclosure, the network system(s) 130 may define one or more networks including wired or wireless networks. The network system(s) 130 may include, for example, the Internet and/or one or more cloud networks. Further, the network system(s) 130 may include a public network, such as the Internet, a private network, such as an intranet, or combinations thereof, and may utilize a variety of networking protocols now available or later developed including, but not limited to TCP/IP based networking protocols. The network system(s) 130 may be configured to communicatively couple the user device(s) 110 and 120 to the collaborative interactive video conferencing platform 140 to enable communication of data between the user device(s) 110 and 120 and the collaborative interactive video conferencing platform 140. The network system(s) 130 may generally be enabled to employ any form of computer-readable or machine-readable media for communicating information from one device to another. The network system(s) 130 may include communication methods by which information may travel between computing devices. The network system(s) 130 may be regarded as a public or private network connection and may include, for example, a virtual private network or an encryption or other security mechanism employed over the public Internet, or the like.

In one embodiment, the user device(s) 110 and 120 may communicate directly with the collaborative interactive video conferencing platform 140 or indirectly through the network system(s) 130 or other available communication channels. In the case the user device(s) 110 and 120 communicates directly with the collaborative interactive video conferencing platform 140, the collaborative interactive video conferencing platform 140 may be implemented and configured to facilitate communication via, for example, one or more communication methods described in reference to the network system(s) 130 above.

According to aspects of the present disclosure, the collaborative interactive video conferencing platform 140 may include a server system(s) 142, a video storage system(s) 144, neural networks 146, a virtual environment system(s) 148, and an interventions database 150. In some embodiments, the interactive video conferencing platform 140 may be one or more servers that may be configured to perform some or all functions of the server system(s) 142, the video storage system(s) 144, the neural networks 146, the virtual environment system(s) 148, and the interventions database 150, according to aspects of the present disclosure. A system(s), in this disclosure, may include various implementations that may include a variety of electronic and computer systems. One or more implementations described herein may implement functions using two or more specific interconnected hardware modules or devices with related control and data signals that may be communicated between and through the modules, or as portions of an application-specific integrated circuit. Accordingly, the system(s) encompasses software, firmware, and hardware implementations.

According to aspects of the present disclosure, the server system(s) 142 may include one or more data servers or databases that may be located on a cloud server/network, an edge server/network, in the network system(s) 130, and/or on a location where the server system(s) 142 may be integrated directly or indirectly with the collaborative interactive virtual conference platform 140. The server system(s) 142 may store and process data received from the user device(s) 110 and 120 and/or the network system(s) 130 to produce an engaging virtual conference, in accordance with embodiments of the present disclosure. Additionally, the server system(s) 142 may receive and transmit data or command signals to and from the video storage system 144, neural networks 146, the virtual environment system(s) 148, and the interventions database 150 to facilitate execution of the engaging virtual conference.

According to aspects of the present disclosure, the video storage system(s) 144 may receive one or more inputs or commands from a first user 112 and a second user 122 through their corresponding user devices 110/120. As described above, the environment 100 may include more than two users or user devices 110 and 120. Accordingly, the video storage system(s) 144 may receive inputs and commands from more than two users or user devices. Alternatively, the video storage system(s) 144 may receive one or more inputs or commands from only the first user 112 or the second user 112 depending on the type of collaboration session. That is, the collaborative interactive video conferencing platform 140 may facilitate one or more virtual conferences.

In one embodiment, the first user 112 and/or the second user 122 may input commands, synchronously or asynchronously, into the first user device(s) 110 and the second user device(s) 120, respectively. The video storage system(s) 144 may receive, directly, or indirectly via the network system(s) 130 and/or server system(s) 142, the input commands from the user device(s) 110 and 120. The video storage system(s) 144 may then transcribe or convert the input commands into text data. For the input commands that may be received in the form of text data, conversion to text data by the video storage system(s) 144 may not be necessary. The video storage system(s) 144 may then analyze the converted text data or received text data, depending on the type or form of the input commands, by capturing semantics of the text data (*e*.*g*., understanding the context of conversations), detecting duplicates and/or redundancies (*e*.*g*., unnecessary information), labeling the text data, and/or detecting prompts. The video storage system(s) 144 may then clean or modify, if necessary, the analyzed text data by eliminating, for example, detected duplicates and/or redundancies. The video storage system(s) 144 may then proceed to extract, if any, the prompts from the analyzed and cleaned text data. In some embodiments, the video storage system(s) 144 may utilize a trained machine learning model. The video storage system(s) 144 may then send the extracted, clean prompts to the virtual environment system(s) 148. In some embodiments, the data conversion or transcription may take place on the user device(s) 110, 120. Accordingly, the user device(s) 110, 120 may implement computer code that enables conversion of audio or other types of data into text and send the transcribed text to the collaborative interactive video conferencing platform 140. Alternatively, as described above, the data transcription or conversion may take place in the collaborative interactive video conferencing platform 140 by the server system(s) 142 so that the input device(s) 110, 120 may not need to perform any data transcription or conversion. Alternatively, all the functions of the server system(s) 142 may be performed by the neural networks 146, including the text transcription or conversion, input, or command data analyses, and/or input or command data cleaning.

In one embodiment, a labeling process may be performed by the video storage system(s) 144 on any type of input or command data, such as image data, video data, and/or other types of audio data. For data that does not include text data, the labeling process may be considered as a type of transcription of commands into text. For example, if the tone of the users 112, 122 is associated with a particular emotion cue by the video storage system(s) 144, the video storage system(s) 144 may generate labels including, for example, angry, happy, sad, concerned, mad, *etc.,* that may be determined by one or more neural networks 146. Multiple participants may be exhibiting similar, different, or even conflicting emotions. The video storage system(s) may determine emotions in real time for each participant based on a set of training data.

According to aspects of the present disclosure, the virtual environment system(s) 148 may analyze certain factors, such as voice tone, words, and motions of the participants, and make certain interventions in the virtual conference to keep the virtual conference moving smoothly or achieve some other objective defined by one or more users.

According to aspects of the present disclosure, the virtual environment system(s) 148 may facilitate generation of one or more computing environments that the users 112, 122 in the environment 100 may utilize to collaborate for creating contents. The computing environments may include, for example, an augmented reality environment, a virtual reality environment, and 2-dimensional (2-D) or 3-dimensional (3-D) simulated environments hut are not limited thereto. Examples of the computing environments and user collaborations in the computing embodiments are also disclosed in co-pending U.S. Patent Application No. 17/006,327, which is incorporated herein by reference in its entirety. Further, any of the machine learning algorithms disclosed in the co-pending application may be incorporated to be used individually or in combination with the machine learning models used by the video storage system(s) 144 and/or the virtual environment system(s) 148.

The system may allow user to configure various possible outputs depending on the received inputs. The system further may use presets, or contextual scenarios, to allow for the programmatic selection of outputs and/or to modify the outputs. Different contextual scenarios may include a business meeting in a small office or large conference room, a house birthday party, a doctor's office, or a night club.

Thus, the system takes advantage of the plurality of data points available from many data sources including user and non-user data sources. User data sources include data generated by user avatars, such as their graphics data, position and orientation of their avatar, their voices, movements, activities performed by the user avatars, *etc.* Non-user data includes objects in the virtual environment, ambient noise, ambient music, lighting, brightness, colors, *etc.* The data may be processed to create camera outputs that represent further stimuli for users to generate emotions and behaviors. The processing of the data comprises a logical interpretation of the input by neural networks implemented by the system, which may be used to create the corresponding camera outputs. Generation of further stimuli may help to access a broader range of human emotions of users interacting in the virtual environment, which may enhance motivation, empathy, learning, connection, and overall energy of users, creating more interesting and fun virtual events, potentially increasing attention span, learning capabilities and productivity. The system and method of the current disclosure may be used for any type of virtual event hosted in a virtual environment, such as virtual work meetings, video games, sales meetings, virtual conferences, seminars, *etc.*

The system may implement machine-learned empathy that enables smart and empathetic virtual environments for generating interventions, such as changes to one or more camera views or environmental changes. In the current disclosure, the term empathy refers to the ability of a computer system implementing artificial intelligence algorithms to logically understand the mental perspectives, emotions, and behavior of users and to use that logical understanding to create outputs that influence the users.

Empathy, as employed in the current disclosure, may be divided into 3 categories:
- Cognitive empathy: the ability to understand thoughts, intentions, and motives of users to influence their behavior through one or more interventions.
- Emotional empathy: the ability to understand emotions and moods. This may be done based on subtle, non-verbal messages such as hand gestures, tone of voice, speaking or typing speed, pauses between words and/or sentences, facial expressions, hand gestures, *etc.*
- Social empathy: the ability to cognitively and/or emotionally understand a group to influence their behavior through one or more interventions. The system may read different cognitive and emotional cues from the several types of input and determine the predominant perspectives, emotions, and behaviors of the group to define interventions that may create desired outputs. The system may further classify and separate interventions based on their socially determined cognitive and emotional predominance, e.g., by providing a certain type of camera output to one group that is predominantly feeling one way and another camera output to another group.
Embodiments may use empathy detection to generate interventions to engender a positive virtual conference experience.

Example interventions can be, for example, raising the volume of a user and turning down the volume of other users, spotlighting a user, modifying the weather of the virtual environment, changing the lighting and/or colors of the virtual environment, generating a popup with text prompting users to take an action, generating audio or haptic data prompting users to take an action, modifying the point of view of the virtual camera one or more user avatars, *etc.* Resulting behaviors of users are further captured by the system and can be used as new input to generate a corresponding new output.

The camera outputs can take the form of one or more of:
- Indirect interventions: these are changes in colors, sounds, atmosphere, *etc.,* that do not tell the users directly what type of behavioral change is expected from them. For example, changing the color of the background, spotlighting someone, changing the music or the weather are all indirect interventions.
- Direct interventions: text, visual or audio output that is direct towards a user to do something, *e*.*g*., ask this question, giving them extra data, providing a summary of information, analyzing info, *etc.* This is related to clear feedback and not something that users would need to interpret, e.g., linked to a clear rule such as if there is a user that hasn't spoken for some time, there could be a text prompt to ask a question to that user. In another example, a salesman is selling to a client in a sales meeting, and the client hasn't spoken for a long time. A time rule is configured in the system such that, when it measures the long silence of the customer, the system can prompt a direct intervention to the salesman to prompt him to ask a question. Such a time rule may be configured so that the system sends a prompt after a predefined number of seconds or minutes, and the time rule can be further influenced by the semantic context of the conversation and/or other factors. For example, if the previous conversation contained an instruction from a user to another one to give them 5 minutes for a document review, then the time rule would consider that time and not cause any interruptions in the meantime. The prompt can be in the form of text, haptic or audio prompts. Text is default but other means are thus possible; or
- Massive behavioral interventions: these interventions can be applied for video games or other applications requiring group interactions. For the case of a video game, a massive behavioral intervention can prompt players to change scenario, or have the world be hit by a meteorite for the players to go elsewhere, or having a monster appear so that the players move elsewhere. These interventions can be applied to, *e.g*., meetings, where a massive intervention could prompt everyone to take a break if things are heating up during the meeting. Such interventions provide no option but to perform the behavior that is prompted.

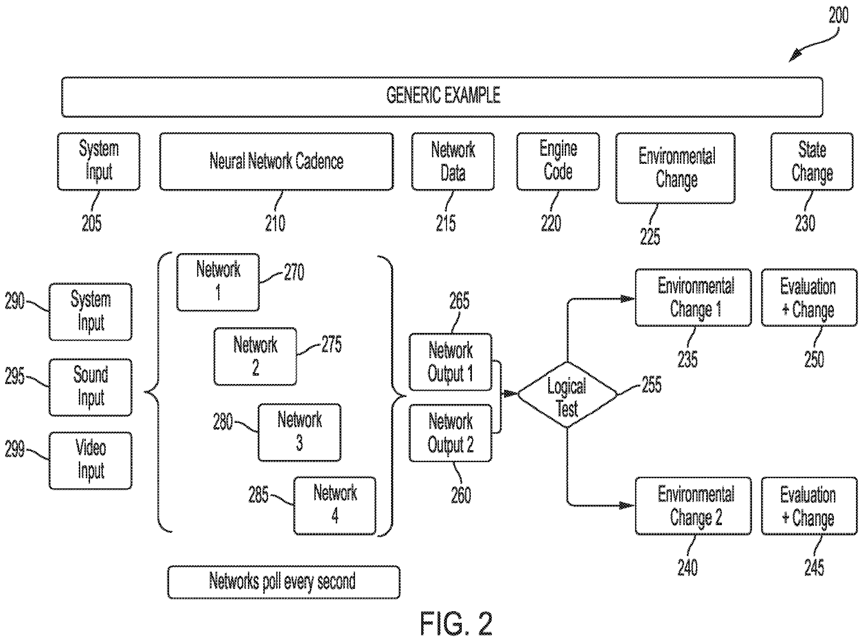

FIG. 2 illustrates a generic example of a process flow 200 of the current system and method. The system may have a plurality of inputs 205, corresponding to system inputs 290-299. The system inputs 290-299 can be, for example, video or audio streams, typing speed, typing volume (cancellation), hand gestures, amount of speaking time, facial (micro) expressions, mouse/swipe velocity, geographic location, browser, loading time, FPS/tab focus, meeting title, number of participants, head position, language toxicity, device, or rhythms of speech, bandwidth, throughput, and strength of incoming signals.

The system may use a plurality of neural networks cadences 210, corresponding to neural networks 270-285 *(e.g.,* facial recognition, sound analysis, *etc.)* that, depending on the configuration of the system and the system inputs 290-299 received, process one or more input categories *(e.g.,* sound 295, video 299, system input 290, *etc.)* and produce different forms of network data 215, corresponding to network outputs 265 and 260. The neural networks 270-285 may operate at different neural network cadences 210. For example, parallel input streams may be processed at different intervals or tick rates depending on what they're capturing. Emotions may be every 5-10 seconds. Movements may be processed several times per second. It may also vary between who's the focus of the conversation. For example, the speaker may be processed more frequently than someone who is not an active participant. Each parallel input stream may be processed differently depending on the people generating the input(s), what they're doing, and other factors. These network outputs 260 and 265 are further processed by performing rule-based operations stored or engine code 220 in the form of logical tests 255 to produce one or more corresponding camera outputs. The camera outputs may be presented in the virtual environment in one or more surfaces thereof, *e.g.,* in a virtual screen of the virtual environment where the event is being broadcasted. The camera outputs may take the form of one or more of environmental changes 225, corresponding to environmental changes 235 and 240:
- the live, unmodified camera feed;
- the camera view adjustments close to real time; or
- replays of scenes, *e.g.,* for producing a "best of including the most relevant scenes of an event.
The system may then implement the environmental changes 235 and 240 by making a state change 230, corresponding to elements 250 and 245, respectively.

Embodiments may comprise a processor configured to receive data from a plurality of sources such as cameras, microphones, sensors, and other suitable input devices. The processor may then preprocess the data by applying filters and transforming the data into a suitable format for analysis. In some embodiments, the data may be segmented into smaller parts or frames to improve the accuracy of the analysis.

The preprocessed data may then be passed through a convolutional neural network (CNN), which is a type of deep learning algorithm that is particularly suited for image analysis. The CNN may be trained using a large dataset of labeled images that correspond to various emotional states. During the training process, the CNN learns to recognize patterns in the data that are associated with specific emotions. The trained CNN may then be used to classify new data based on the patterns it has learned.

In some embodiments, the system may use multiple CNNs, each trained on a specific type of input. For example, one CNN may be trained on facial expressions, while another may be trained on voice intonation. The outputs of these CNNs may then be combined using a fusion algorithm to produce a more accurate prediction of the emotional state.

In addition to CNNs, other AI algorithms such as recurrent neural networks (RNNs) or support vector machines (SVMs) may be used depending on the type of input and desired output. For example, RNNs may be used for time-series data such as voice intonation, while SVMs may be used for hand gesture recognition.

Overall, the present disclosure provides a method and system for using machine learning to detect emotions using a variety of inputs. The use of CNNs and other suitable AI algorithms allows for accurate and robust detection of emotional states, which may be useful in a variety of applications such as market research, mental health diagnosis, and human-computer interaction.

The camera outputs shown in the camera replays may be configured to prompt one or more behavioral modifications of one or more users in the virtual environment to have an effect in the mood of the event and its dynamic, which may create a more lively, spontaneous, and realistic user experience. The camera adjustments outputs may include, for example, zooming in or out of a user, panning the camera, changing the angle of the camera, adding camera effects, modifying the field of view of the camera, *etc.* Resulting behaviors of users are further captured by the virtual cameras and may be used as new input to generate a corresponding new output.

The audio input may be captured by microphones of users and may include voice data of users, music of the virtual environment, typing sound, tone, and speed of voice, speaking rhythm, prosody, *etc.* The video input may be captured by real and virtual cameras, may include the virtual cutout of the various users and elements in the virtual environment along with their positions and orientations, the current point of view of each user's virtual camera, micro-facial expressions of users, hand gestures, head movements; and the system input may be captured by the processing system of the virtual environment and may include typing speed, loading speed, frames per second (FPS), mouse/swipe velocity, current system load, system capacity including available bandwidth, available computing power, available memory, *etc.*

The neural networks may use suitable AI algorithms that take data, such as visual data, and pass it through a logical graph where a weighting is applied, and a numeric response is returned towards some attribute. There are a few permutations of AI algorithms that may be used depending on the type of input and desired output. One such AI algorithm example are convolutional neural networks.

The network outputs may be processed inputs of one or more categories that are further processed by performing rule-based operations stored in the form of logical tests to produce one or more corresponding camera outputs.

The camera outputs, also referred herein as interventions, may be configured to prompt one or more behavioral modifications of one or more users in the virtual environment to have an effect in the mood of the event and its dynamic, which may create a more lively, spontaneous, and realistic user experience.

The camera outputs may be individualized in a way that they vary from user to user based on a user profile. The user profile may include data including user background, preferences (*e.g*., topics of interest, music, food, *etc.*)*,* culture, personal history, age group, social class, personality, learning type, *etc.* The preferences may also include preselected intervention criteria, such as whether the user prefers large or small interventions, a selection between specific interventions based on various contextual scenarios or emotional cues. The system may generate further user profile data that is used to continuously update the user profiles based on the interactions that they have in the virtual environment. The system is thus continuously learning from each user and uses the data to further improve itself and understand each user better, increasing its empathy level. Thus, a plurality of "best of' replays may be generated based on the user profile, with at least one possible replay being provided to each user.

In addition to replays, embodiments may produce an automated summary of the virtual conference based on inputs, such as, detected emotional cues, body language, *etc.* The summary may be a smart analysis indicating one or more meeting outcomes, such as whether the meeting was happy, sad, mad, bad, or resulted in a sale. The automated summary may also include statistics such as a log whether there were many action points, or the amount of laughter, number of questions asked, or participation of diverse people in the virtual conference. Embodiments may be directly connected with social media to automatically report the automated summary onto a social media platform.

Indirect environmental interventions can be presented to users on an individual or group level. Thus, depending on the desired outcome, the system may determine that a certain intervention is shown only to certain users and not to others.

In an example of an indirect intervention, if a user hasn't spoken for some time in a meeting, the intervention can be to play an individualized tune that is known to be the preferred song of the user, which can be played only to that user to prompt him or her to get energized and engaged again in the conversation. In another example, if the system determines that the energy of the virtual meeting is that of irritation, *e.g*., because a majority of users are displaying signs of irritation (*e.g*., facial expressions, tone of voice, hand gestures, words used, *etc.*)*,* then the system may determine to add more cold colors into the virtual environment, *e.g*., blue, green or purple and/or play a smoothing background music into the virtual environment that shift the energy of the virtual session. The songs played and/or the colors may be individually selected based on the user profile, so, even if a similar intervention was selected (*e.g*., modifying colors and music), each user may end up seeing and hearing something different. The system may further determine to modify the POV of the current virtual camera of the user and/or to display something in front of the virtual camera that may have an effect in his or her emotions.

Likewise, a direct intervention may be sent at the same time to a plurality of users, each one comprising differences based on the user profile.

The same logic applies to massive behaviors interventions. For example, if a change of game level is to take place, the system may display a message to all users to proceed to move to a certain area, where the text of the message has a different color per user based on the user profile. In addition, the music played may be different to each user based on the profile.

In one embodiment, a virtual environment could be a 3D board game. Interventions could be massive, such as the board exploding. Several different interventions could be made to the game based on detected inputs such as behavior, actions, emotions *etc.* This can have a massive impact on interactivity, retention, and churn of a product.

In another embodiment, such as a training, sales or educational environment, combining the power of 3D environments with video conferencing services can be very useful. Often times exciting graphics and light shows are very expensive to produce. They are vastly cheaper in a virtual environment and can elicit similar effects.

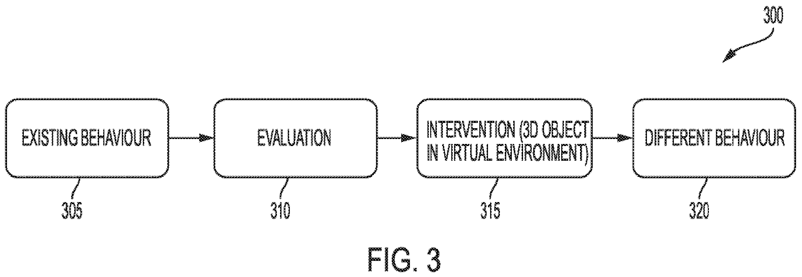

In FIG. 3, by taking in several types of inputs 300 to determine an existing behavior 305, processing the data (through the neural networks), and analyzing and evaluating the network output 310 through the logical tests, the system may design interventions 315 in the form of camera output intended to prompt a different behavior 320 in the virtual environment. The interventions may be determined based on a learned empathy, as described throughout this specification.

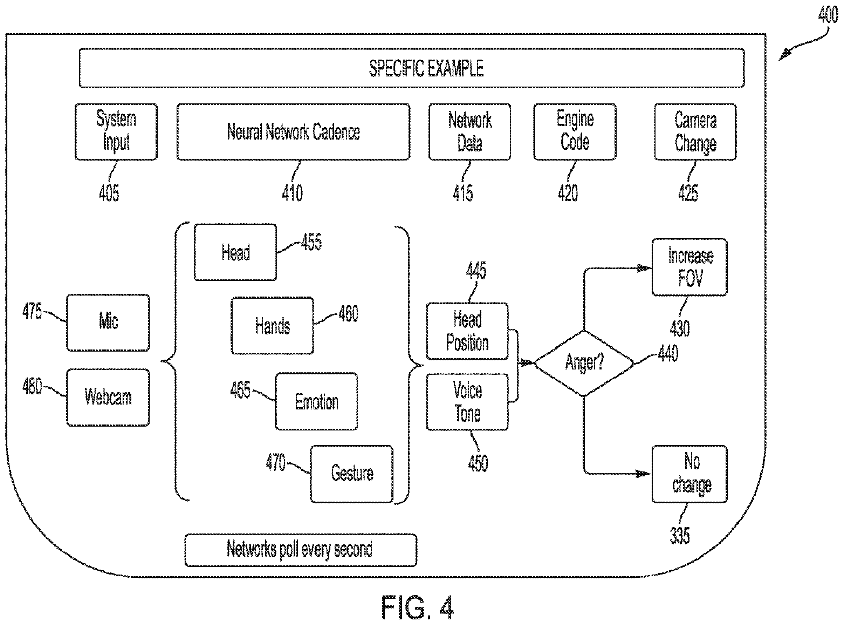

FIG. 4 illustrates an example flow chart 400 in which system inputs 405 captured by a microphone 475 and webcam 480 are sent for processing by four neural networks 410, each neural network 410 being configured to process a different element, *e.g*., head movements 455, hand movements 460, emotions 465 and gestures 470, including their positions and orientations in the virtual environment. The neural networks 455, 460, 465, and 470 may routinely (*e.g*., every second) poll the input data and may produce network data 415 such as head position 445 and voice tone 450. The polling may happen at different neural network cadences 410 based on several factors, such as who is talking, the need for frequent sampling, bandwidth, and other compute resources. The changing of the cadence can occur in real time. The selected network data 415 may be used in a logical test 440 to conclude an emotion, such as anger, which may prompt a corresponding output 425 in the form of an increase in FOV 430, a change in camera angle, moving the camera away or towards the user, a change in the weather, sound, colors, *etc.* For example, if the voice tone 450 is elevated and the head position 445 (and, perhaps, the facial gestures) are characterized by the system as somehow "aggressive," then the logical test 440 may conclude that the user is displaying anger based on the training of the neural networks 410.

The output can be, for example, in the form of a change in weather outside of the virtual environment, such as beginning a thunderstorm, playing thunder sound, amplifying the voice of the user, changing the background color (*e.g*., into a red color) or fading a color such as from red into purple or blue. The environmental intervention can thus prompt a behavior or and emotion. The behavior is further sensed by the virtual environment to generate further outputs as necessary.

In some embodiments, the system enables the recording of events in the virtual environment to be presented to users when desired. In other embodiments, the system further enables applying AI algorithms that enable summarizing the events to select the most interesting scenes of the event to create a summary thereof. The recordings can be made through one or more virtual broadcasting cameras in the event capturing a broad range of data comprising user and nonuser data. The event recordings can be presented on one or more surfaces of the virtual environment or can be stored in memory for sending later to user devices for users to play at a later point. The event recordings can be further processed, if necessary, before sending to users. The event recordings may be detected by, for example, identifying strong reactions from the participants. The reactions could be stored using several camera angles at once and stored in memory for playback later, such as after the virtual conference is over, at the end, or at any time a user requests a playback. The playback may be on a full user screen or on a surface of the virtual environment, such as a virtual white board.

The most important parts for playback may also be based on the contextual scenario. For example, a business meeting may need to be a selection of main points, that could be detected via a combination of speech recognition and empathy-trained neural networks. Alternatively, a meeting of entertaining material would have a different context, likely identifying the activities that engendered the strongest responses or laughter.

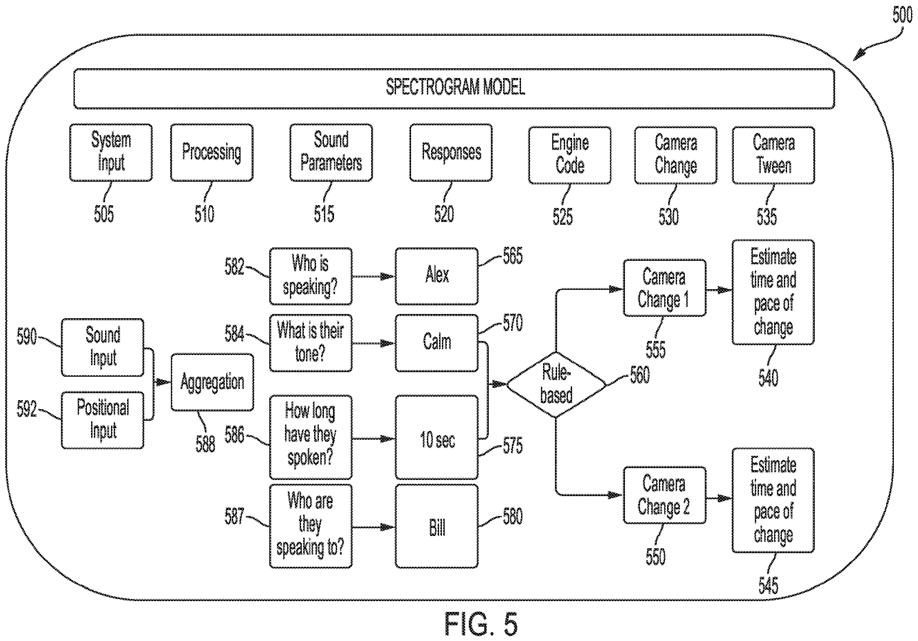

FIG. 5 illustrates an example model 500 where the system takes system inputs 505, such as sound input 590 including positional input 592 of the people producing the sound in the virtual environment. The sound and position are processed 510 and aggregated 588 to extract different sound parameters 515, such as to determine who is speaking 582, what their tone is 548, the length of their speech 586, and the recipient of their message 587. For each sound parameter 515 there may be respective responses 520, which in this example are: Alex is speaking 565, his tone is calm, he's been speaking for 10 seconds, and he's talking to Bill. For such a sound analysis, a sound spectrogram may be used to provide valuable data that may be processed to extract the required responses. The spectrogram analysis may focus on the energy, amplitude, or frequency of the voice of someone and then analyze and try to estimate the size of that curve or pace of camera change 540 and 545 to predict the pattern to mobilize the camera accordingly. This data may go through engine code 525 such as a rule-based logical test 560 to determine one or more camera changes 530, e.g., moving the camera 550 or modifying the cutting speed and duration of a camera take 555. For example, a rule may be that after 10 seconds of the same person speaking there should be a camera change 540, such as a camera cut, or another camera change 545, such as a slow panning towards another speaker to prompt a change of speaker, e.g., prompting Bill to interrupt Alex and ask a question.

The system may be trained such that it uses its own feedback data or user preferences or inputs to improve the user experience-based machine learning. For example, if the system considers after one or more rounds that performing a cut after 10 seconds of speaking is too quick, then the system may add more seconds to the next round. The system may further perform semantic analysis and processing to determine what is being said in an event and accordingly generate camera outputs, *e.g.*, if a user is saying "we are about to finish this meeting," the framing, lighting, cut rate, *etc.,* of camera outputs may be modified to create a more dramatic effect or an environmental change, such as adding epic music and/or dimming the lights of the virtual environment. The system may further use direct user feedback to improve itself. There are different algorithms that may be trained to summarize data, such as those used by programs including Blinkist and Newsleo, and this may be incorporated into the system.

Embodiments may solicit various types of feedback data before, during, and after virtual conferences. This data may then be used to train the neural networks to detect what people enjoyed or did not enjoy, and change behavior based on that information. The feedback could be, for example, based on a slider included on a user interface (UI) indicating that the users are enjoying a virtual conference. The system may prompt the user to move the slider at various times, such as when an intervention is taken, or periodically, such as every 5 minutes, or a combination of the two. In this way, the system may be able to determine the difference between successful and unsuccessful interventions based on user rankings corresponding the sliders' positions for each individual user. Alternatively, users may be asked to provide a value, such as a number 1-5 or "good," "OK," or "bad." Moreover, the system may be able to determine the subtlety of various interventions. There are times calling for mild interventions, such as a pregnant pause. There could be times calling for greater interventions, such as an argument or a fight, and the conference needs to calm down. Selection of which intervention to use is discussed further below.

The system may further apply further processing, such as preemptive smoothing on the spectrogram data to predict where someone is, *e.g*., moving their mouth next. In this context, *e.g*., if someone is going to make a statement that lasts, *e.g*., 5 seconds, then that may be setup into the camera and moved accordingly, or an environmental change may be made to the virtual environment. In this manner, the system may capture the emotional energy of a meeting or event and accordingly adjust the camera based or modify the virtual environment on this data.

The preemptive smoothing may be used for 2D motion information, such as preemptively moving puzzle pieces, but there may be a lot more than that that may be done with it, for example if someone is having their finger tracked, that is a lot of data so if you may interpolate and smoothen that out it may increase the FPS. Embodiments may increase the FPS by reducing the granularity of minor features, such as fingers, to allow for higher throughput and less bandwidth consumption. This can be advantageous, particularly at high scale, because many hundreds or thousands of virtual conferences may be occurring in parallel. Saving a little data on each of those active virtual conferences may save a large amount of aggregate computer and network resources.

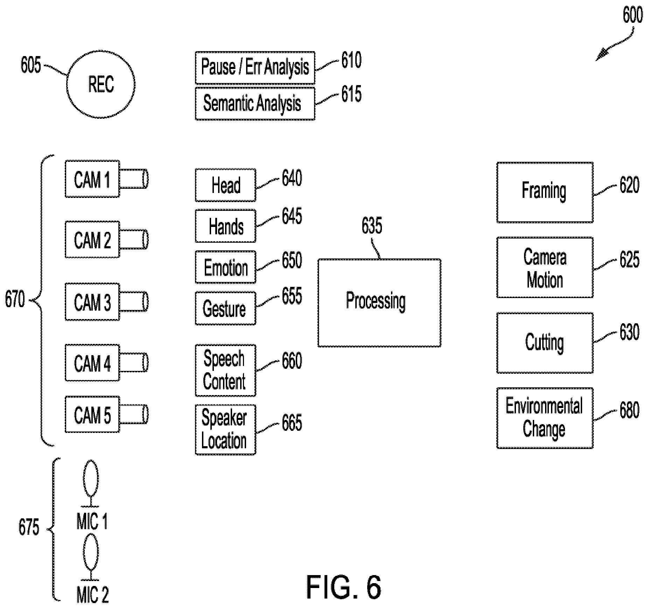

FIG. 6 illustrates an overall system 600 where a plurality of virtual broadcasting cameras 670 are installed in the virtual environment to capture various angles that may be used for capturing a greater number of details from the scene, and a plurality of microphones capturing sound from within the scene, which may be inputs to prompt corresponding processing 635 and outputs. The various camera feeds may be also used to generate more possible data for processing 635 to generate more possible replays, define live camera adjustments, or make environmental changes, to prompt a behavioral change. The system further captures the spatial positions or locations 665, orientations, speech content 660, and state of each of the objects and avatars in, for example, a virtual environment of a virtual conference, such as focusing on head 640, hands 645, emotions 650, and gestures 655, all of which may be reconstructed 605 from any angle to generate corresponding replays. The spatial positions, orientations and state may be metadata of the input data, so it may used to further characterize the input data to derive a different type of processing 635 and output. Resulting camera outputs may be, *e.g*., various types of camera framing 620, camera motion 625, cutting 630, environmental change 680, *etc.* The system further captures speech content that may be used for semantic analysis 615 that may provide further feedback for generating the resulting outputs.

The present disclosure provides a system and method for capturing video using different camera angles to enhance the visual storytelling experience. In particular, the present disclosure describes various camera angles, including eye level, Dutch, low angle, high angle, top angle, and over shoulder, that can be used to capture video in unique and compelling ways.

Eye level camera angle refers to the placement of the camera at the same level as the subject's eyes. This angle is often used in interviews and dialogue scenes to create a sense of intimacy and connection between the subject and the viewer. By using an eye level camera angle, the viewer can feel as though they are in the same virtual environment as the subject and are having a conversation with them.

Dutch camera angle, also known as a canted angle, refers to tilting the camera to create a slanted or diagonal composition. This angle can be used to create a sense of tension, unease, or disorientation in the viewer. Dutch angles are often used in horror or thriller films to create a sense of unease or disorientation in the viewer.

Low angle camera angle refers to the placement of the camera below the subject's eye level, looking up. This angle can be used to create a sense of power, dominance, or heroism in the subject. Low angle shots are often used in action movies to make the hero appear larger than life.

High angle camera angle refers to the placement of the camera above the subject's eye level, looking down. This angle can be used to create a sense of vulnerability or powerlessness in the subject. High angle shots are often used in horror movies to create a sense of vulnerability in the victim.

Top angle camera angle refers to the placement of the camera directly above the subject, looking straight down. This angle can be used to provide a unique and interesting perspective on the subject. Top angle shots are often used in documentaries or nature films to show the subject from a different perspective.

Over shoulder camera angle refers to the placement of the camera behind one character, looking over their shoulder at another character. This angle can be used to create a sense of intimacy or tension between the characters. Over shoulder shots are often used in dialogue scenes to show the reactions of both characters.

Overall, the present disclosure provides a system and method for capturing video using different camera angles to enhance the visual storytelling experience. By using a variety of camera angles, filmmakers can create unique and compelling visuals that capture the attention of the viewer and help to tell the story in a more engaging and effective way.

Up shot camera shot refers to the placement of the camera below the subject, looking up. This shot can be used to create a sense of power or dominance in the subject. Up shot shots are often used in action movies to make the hero appear larger than life.

Down shot camera shot refers to the placement of the camera above the subject, looking down. This shot can be used to create a sense of vulnerability or powerlessness in the subject. Down shot shots are often used in horror movies to create a sense of vulnerability in the victim.

Over the shoulder camera shot refers to the placement of the camera behind one character, looking over their shoulder at another character. This shot can be used to create a sense of intimacy or tension between the characters. Over the shoulder shots are often used in dialogue scenes to show the reactions of both characters.

Close up camera shot refers to the placement of the camera very close to the subject, capturing a detailed view of the subject's face or body. This shot can be used to create a sense of intimacy or to emphasize the emotions of the subject.

Extreme close-up camera shot refers to the placement of the camera extremely close to the subject, capturing a small detail such as the eyes or the lips. This shot can be used to emphasize a specific emotion or feature of the subject.

Medium shot camera shot refers to the placement of the camera at a moderate distance from the subject, capturing the upper body or waist up. This shot is often used to show the subject's body language or physical interactions.

Long shot camera shot refers to the placement of the camera at a far distance from the subject, capturing the full body and the surrounding environment. This shot is often used to establish a location or setting.

Single shot camera shot refers to the placement of the camera capturing one subject only.

Two-shot camera shot refers to the placement of the camera capturing two subjects in a single shot.

Three-shot camera shot refers to the placement of the camera capturing three subjects in a single shot.

Point of view (POV) camera shot refers to the placement of the camera capturing a scene from the perspective of a character. This shot can be used to provide a unique and immersive experience for the viewer, as if they are experiencing the scene firsthand.

The present disclosure provides a system and method for capturing video using different camera shots to enhance the visual storytelling experience. In particular, the present disclosure describes various camera shots, including up shot, down shot, over the shoulder, close up, extreme, medium shot, long shot, extreme, single, two, three shot, and point of view (POV), that can be used to capture video in unique, compelling, engaging, and compelling ways.

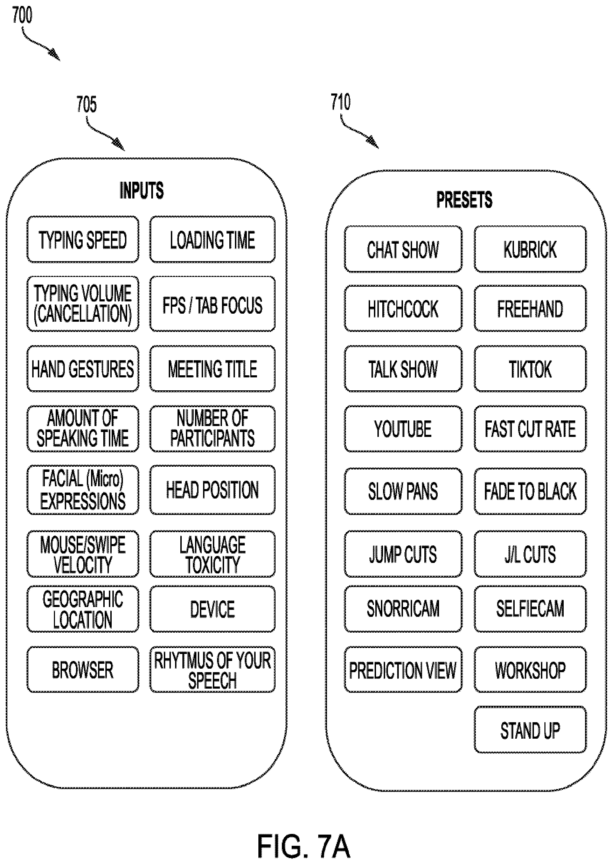

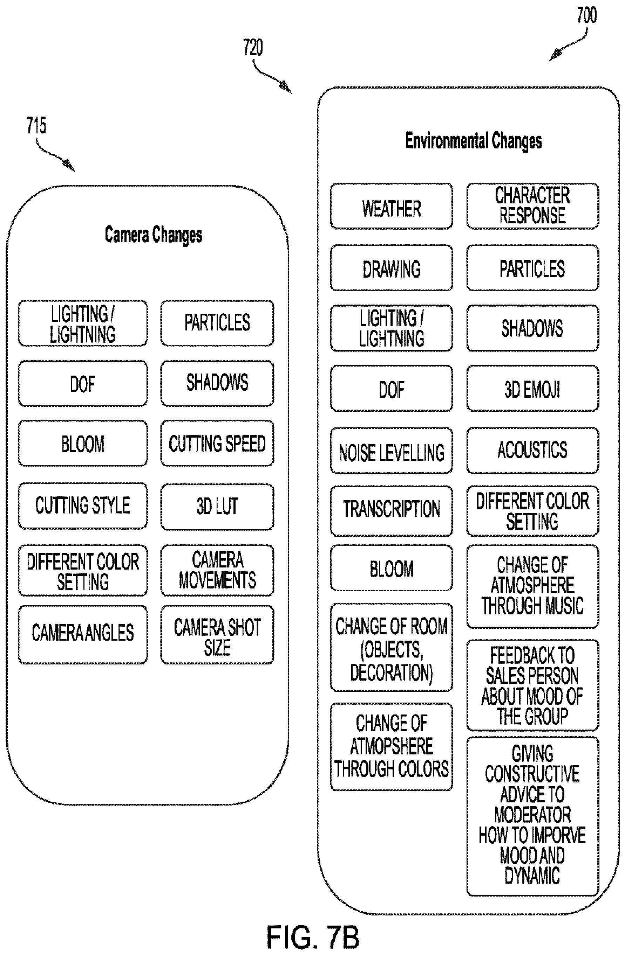

FIGS. 7A and 7B illustrate different various parameters 700, including inputs 705, presets 710 and outputs 715, 720 that may be combined accordingly. The presets 710 are the contextual scenarios where inputs are captured, such as the type of meeting the virtual conference is for, and outputs 715, 720 are generated and may influence the type of logical tests performed on the inputs. The inputs 705 can include typing speed, typing volume (cancellation), hand gestures, amount of speaking time, facial (micro) expressions, mouse/swipe velocity, geographic location, browser, loading time, FPS/tab focus, meeting title, number of participants, head position, language toxicity, device, or rhythms of speech, *etc.* The presets 710 may be selected in advance by a meeting admin and may further include an event category, e.g., whether it is a business meeting, sales meeting, classroom, chat show, Alfred Hitchcock, talk show, YouTube, slow pans, jump cuts, snorricam, prediction view, Stanley Kubrick, freehand, TikTok, fast cut rate, fade to black, J/.L cuts, selfiecam, workshop, or standup, *etc.* For example, an input that is determined to be an expression of happiness may result in a different output 715, 720 in a workshop compared to a conversation between friends, where in a workshop a replay, music, or environment may be set to be formal than in a friendly conversation. The outputs 715, 720 may include lighting/lightening, depth of field (DOF), bloom (shader effect), cutting style, different color settings, camera angles, particles, shadows, cutting speed, 3D look up tables, camera movements, and camera shot size.

A boardroom, for example, is different than an exhibition room, which is different from a sales shop. Every virtual environment is different, and the input means a different thing in each context and may create another output 715, 720, so it is like a framework, and it does influence both inputs and outputs. The preset may be selected before the meeting and may be modified by the host. In a specific timeframe it is a predefined setup, then it may be that the event dynamic changes, or it may be that the host intervenes and changes the settings, or something happens that changes the settings so much that it becomes a new context (such as like an output).

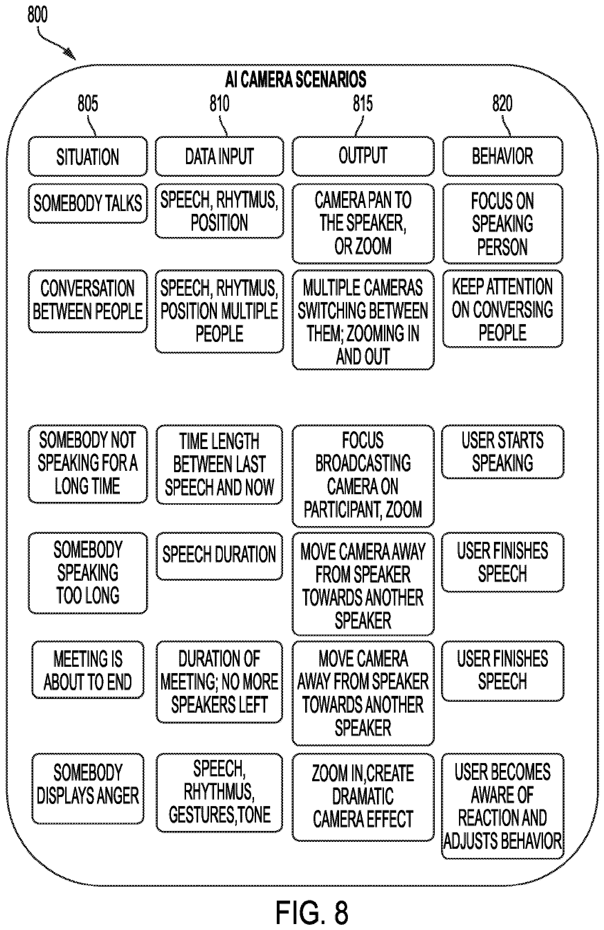

FIG. 8 illustrates a plurality of potential AI camera scenarios 800 of certain embodiments. These may include situations 805, such as somebody talking, a conversation between people, somebody not speaking for a long time, somebody speaking too long, a meeting being about to end, and somebody displaying anger, *etc.* Data inputs 810 may include 1) speech, rhythm, position; 2) speech, rhythm, positions of multiple people; 3) time length between last speech and now; 4) speech duration; 5) duration of meeting, no more speakers left; 6) speech, rhythm, gestures, and tone, *etc.* Outputs 815 may include camera pan to the speaker or zoom, multiple cameras switching between them and zooming in and out, focus broadcasting camera on participant and zoom, move camera away from speaker towards another speaker, move camera away from speaker towards another speaker, zoom in and create a dramatic camera effect. Behaviors can include focus on the person speaking, keeping attention on people talking, user starts speaking, user fmishes speaking, or user becomes aware of reaction and adjusts behavior, *etc.*

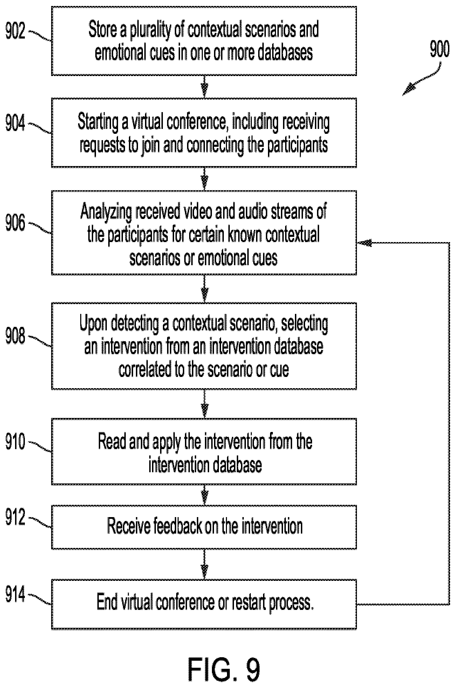

FIG. 9 illustrates a flow chart 900 according to one embodiment. This embodiment may be performed by an interactive virtual conference platform in one or more virtual environment systems and include a plurality of virtual environments stored in memory. The platform may also store a plurality of contextual scenarios and emotional cues, as illustrated in step 902. In this embodiment, a virtual conference begins in step 904. This can include receiving one or more requests to join a virtual conference from one or more user devices. The system may then associate the one or more requests together, based on a unique identifier or a pre-programmed set of values. The requests may be connected to form a virtual conference. In step 906, the system may analyze received input data including video and audio feeds from the one or more user devices for pre-programmed contextual scenarios or emotional cues, as discussed further above. In step 908, when the system detects such a contextual scenario or emotional cue by analyzing the input data, the system may select one or more interventions from an intervention database correlated to the contextual scenario and input data. Such a selection may be affected by the empathy level that the system has learned based on training data and user feedback. Several inputs may be used to select the intervention, as discussed above. For example, voice tone, user preferences, and sound level of a voice. All this information may be used to, for example, determine that a conversation is getting angry, and an intervention is needed to tone down the conversation. The system can select an intervention from the intervention database or memory, which may be read and applied in step 910. For example, a clown can proceed across the screen, or pleasant music can begin playing. In step 912, the system may collect feedback to determine the success of the intervention. Success can be determined in various ways. For example, if the goal is to tone down the conversation, the system may monitor the tone or words used to determine whether the conversation was toned down. Alternatively, for example, if the system is set up to encourage an argument for entertainment purposes, success may be determined based on whether there is more anger in the conversation. Further feedback may be solicited from the participants via one or more user inputs. The user inputs may be on a scale, such as 1-10, and may include items such as whether they enjoyed the intervention, how effective the intervention was for a given goal, and whether a different intervention would have been preferred. The system may then collect this feedback to incorporate it into future virtual conferences to make them more successful. Finally, in step 914, the system may end the virtual conference or repeat the process beginning at step 906 until the virtual conference is over.

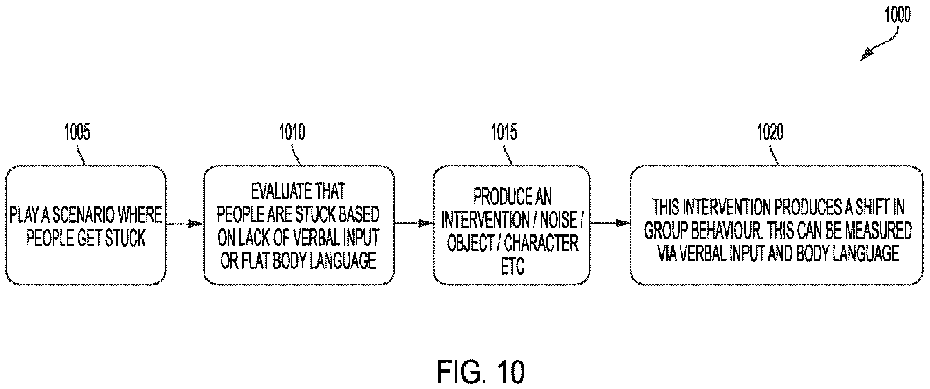

FIG. 10 illustrates an example environmental intervention flow 1000. For example, if people are stuck in a virtual environment 1005, the virtual environment may evaluate that people are stuck based on a lack of verbal input or flat body language 1010. The virtual environment produces an intervention such as a noise/object/character that produces a shift in the group behavior 1015. The behavior can be further measured and be used as input 1020 to determine whether the intervention was a success or failure to improve future interventions or to change interventions. For example, volume, color, tone, shape, *etc.* may all elicit different behavioral systems that the neural network will be able to assess based on physical and verbal responses to the intervention(s).

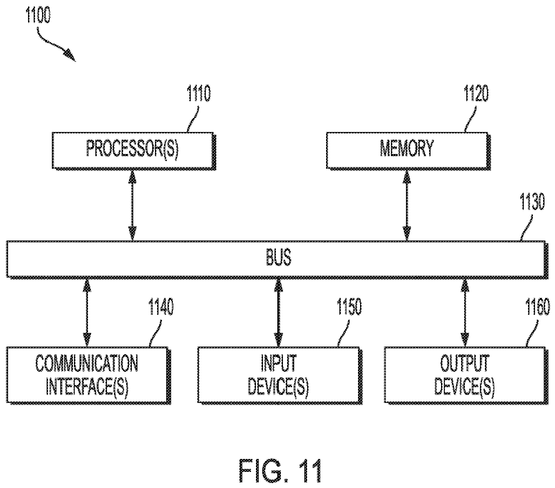

FIG. 11 illustrates an example of a computing device 1100 of a computer system. The computing device 1100 may include processor(s) 1110 (*e.g*., CPU, GPU, or other processing unit), a memory 1120, and communication interface(s) 1140 (*e.g*., a network interface) to communicate with other devices and receive inputs from those devices, such as typing speed, typing volume (cancellation), hand gestures, amount of speaking time, facial (micro) expressions, mouse/swipe velocity, geographic location, browser, loading time, FPS/tab focus, meeting title, number of participants, head position, language toxicity, device, or rhythms of speech, wherein the interactive video conferencing platform is configured to choose the intervention based on one or more of the inputs. Memory 1120 may include volatile memory, such as RAM, and/or non-volatile memory, such as ROM and storage media. Examples of storage media include solid-state storage media (*e.g.,* solid state drives and/or removable flash memory), optical storage media (*e.g.*, optical discs), and/or magnetic storage media (*e.g*., hard disk drives). The aforementioned instructions (*e.g.*, software or computer-readable code) may be stored in any volatile and/or non-volatile memory component of memory 1120. The computing device 1100 may, in some embodiments, further include input device(s) 1150 (e.g., a keyboard, mouse, joystick, controller, or touchscreen) and output device(s) 1160 (e.g., a display, head-up display, AR display, VR display, printer). For example, if the user device(s) 110, 120 may be embodied as a tablet computer, the user device(s) 110, 120 may have a touchscreen and a display. The aforementioned elements of the computing device 1100 may be connected to one another through a bus 1130, which represents one or more busses. In some embodiments, the processor(s) 1110 of the computing device 1100 includes both a CPU and a GPU.

As one example, the system may detect that a person is quiet while too many are talking. The system may capture the noise from the multiple inputs and conclude that many are active and one is passive (or silent), prompting a decrease in volume of all active users and a spotlight on the silent user. As a result of this behavioral intervention, the other users may speak less and the silent person may speak more, restoring the balance of the meeting. Users may be able to set in their profiles how aggressively they would like the system to use this intervention for themselves or others.

A face detector AI algorithm may be used to generate facial geometry coordinates. The facial geometry coordinates may create a steering vector for the orientation of the user's head. As the user turns their head, two manifestations are possible.

First, the positional vector may be detected by the virtual camera facing the user in the 3D space, which may move in an inverse movement to retain the illusion of the 2D camera feed being correctly orientated within the 3D geometry of the virtual conference, which may be in a virtual environment. This technique can be called match-moving. The user's head as a controller can also be applied to entities in the virtual environment such as a light, casting dynamic shadows as the user moves around.

Second, the positional vector can be detected by a camera representing either the user's first person or second person perspective in 3D space. As the user moves their head from side to side, up and down, or forward and backwards, there may be a scaling/limiting and minimum fence logic. This may allow the 3D engine to draw non-literal geometry. Whereas in a virtual reality 3D space, the user's movements may be captured 1: 1, on a 2D screen, the user's movements are scaled accordingly.

Hand pose may be used to map the coordinates of the users' fingers in 3D space. The 3D coordinates of each knuckle/digit may be captured essentially in realtime. This information may then be passed to a rigged 3D model of hands. The user's skin colour may additionally be captured from a representative patch of the forehead, as identified by a neural pace detection network. This colour/texture may then be mapped onto an emissive property of the texture of the rigged 3D model of the user's hands. This may then allow the virtual environment to display personalized and realistic 3D hands. The hands may also be rigged to gesture/grasp/pinch or other movements. More gross movements of the hands can be mapped to any visual property of the virtual environment, *e.g*., weather, lighting, wind outside, *etc.*

Additional problems that certain embodiments may address include standardized teaching environments that may slow down the learning of many students, as most people have different learning styles, personalities, capacities, *etc.* When users are not connecting emotionally to the content at hand, they become bored, which increases the resistance to learn and the stress in the students. Each user may have a predefined profile that may be based on user-inputted preferences or past experiences with the user's reaction(s) to different interventions. Accordingly, each presentation may be customized for each person. One person may learn better in a more formal school-like virtual environment, whereas another may learn better in a virtual park-like environment.

One embodiment may solve this problem by creating a smart virtual environment. In this embodiment the system may be used to enhance learning in a classroom or seminar context. A user profile may contain preferences, *e.g*., topics of interest, music, food, background images, culture, personal history, age group, social class, personality, learning type, *etc.* The system may generate further user profile data that may be used to continuously update the user profiles based on the interactions that they have in the virtual environment and responses to interventions. The system is thus continuously learning from each user and uses the data to further improve itself and understand each user better, increasing its empathy level.

User learning style is also useful because it determines how each user preferably learns to increase their learning efficiency.

An admin (*e.g*., a teacher) may define the content to be delivered to a class. The system may analyze the content and the user profiles of each student and outputs a plurality of presentation media that best match the user profile of each student. Accordingly, each student may receive different presentations of similar information. By finding a presentation medium that best matches each student, students may connect to their specific learning style, increasing the emotional connection to the content and promoting and enhancing learning.

The processing of the content in view of the user profiles may include summarizing the content in a view that is relatively different from student to student, where for certain students the system may use words that are more emotionally charged or that could resonate more with his specific profile, while for other words that are more technical and with a higher level of detail. The system may also produce or select examples that can illustrate specific situations in such a way that they resonate better with the students. Furthermore, the type of visual medium to be selected can vary from user to user. For example, if a student is defined to be a visual learner, the system can create a short movie and/or select or mix movies from different sources that can constitute a more efficient learning presentation for the student. For another user who is more analytical and prefers reading, a text or video clip with more analytical examples may be provided to him. Modifications in the virtual environment that include changes in colors, background, sounds, ambiance, *etc.,* may also take place individually that can be used to enhance the learning of each student.

In some embodiments, the system may modify certain aspects of the content to be delivered based on a reading of user input in substantially realtime. For example, if a user looks confused or is expressing doubt, the system may read this and ask the user what, if anything, can be done to improve his experience and provide options or leave a space for the user to describe his situation. The system can further adapt certain parts of the content, visuals, audio, *etc.,* in realtime as the system detects changes in the behavior of the user. The presentation can be in the form of video, audio, haptic experiences, total modification of a virtual environment to represent the lesson that is being delivered, can be done in AR and/or VR, *etc.* The system could also not necessarily be a virtual environment but also a program that provides these different types of content presentations, from which one of them is for presentation in a 3D virtual environment, but not limited to it. The system may also give this information to the teacher or a parent to take additional interventions for the child to make sure that they understand the material.

The system may further classify students with a similar learning style and provide the lesson in a similar or the same medium. This may also help to promote group learning and interactions, as users with the same learning style may benefit from each other's interpretations and processing of the lesson. Users may be classified into one or mor learning style (*e.g*., visual or audio) and receive similar virtual environments and interventions to users under the same classification
Instructions executable by one or more processors may be stored on a non-transitory computer-readable medium. Therefore, whenever a computer-implemented method is described in this disclosure, this disclosure shall also be understood as describing a non-transitory computer-readable medium storing instructions that, when executed by one or more processors, configure and/or cause the one or more processors to perform the computer-implemented method. Examples of non-transitory computer-readable medium include RAM, ROM, solid-state storage media (*e.g*., solid state drives), optical storage media (*e.g*., optical discs), and magnetic storage media (*e.g.,* hard disk drives). A non-transitory computer-readable medium may be part of the memory of a computer system or separate from any computer system.

It should be appreciated that in the above description of exemplary embodiments, various features are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Use of the word "or" in the specification is meant to be non-exclusive and should be interpreted to include each individual element alone or any combination thereof. Thus, the claims following the Detailed Description are hereby expressly incorporated into this Detailed Description, with each claim standing on its own as a separate embodiment of this disclosure.

Furthermore, while some embodiments described herein include some, but not other features included in other embodiments, combinations of features of different embodiments are meant to be within the scope of the disclosure, and form different embodiments, as would be understood by those skilled in the art. For example, in the following claims, any of the claimed embodiments may be used in any combination.

Thus, while certain embodiments have been described, those skilled in the art will recognize that other and further modifications may be made thereto without departing from the spirit of the disclosure, and it is intended to claim all such changes and modifications as falling within the scope of the disclosure. For example, functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Use of the term "or" in this specification means one or more of any of the available options and does not have to be a mutually exclusive list. Thus, to the maximum extent allowed by law, the scope of the present disclosure is to be determined by the broadest permissible interpretation of the following claims and their equivalents and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted.

Aspects of the present disclosure are set out in the following numbered clauses:
Clause 1. A method comprising:
   storing, by an interactive virtual conference platform in one or more virtual environment systems, a plurality of virtual environments;
   storing, by the interactive virtual conference platform in the one or more virtual environment systems, a plurality of contextual scenarios;
   storing, by the interactive virtual conference platform in the one or more virtual environment systems, a plurality of emotional cues;
   receiving, at the interactive virtual conference platform, a plurality of requests to join a virtual conference;
   connecting, by the interactive virtual conference platform, a plurality of sessions corresponding to the plurality of request, wherein each session comprises input data comprising at least one or more video or audio streams, which collectively form a plurality of video or audio streams;
   analyzing, by a server of the interactive virtual conference platform, the plurality of video or audio streams;
   detecting automatically, by the interactive virtual conference platform, a contextual scenario of the plurality of contextual scenarios or one or more emotional cues from the input data;
   selecting, by the interactive virtual conference platform in response to detecting the contextual scenario or emotional cue, an intervention from an intervention database based on the analyzed input data, the detected contextual scenario or the detected one or more emotional cues;
   reading, by the interactive virtual conference platform in response to detecting the contextual scenario, the intervention from the intervention database; and
   intervening, by the interactive virtual conference platform, in the virtual conference based on the intervention read from the intervention database, wherein the intervention comprises at least one change to an output audio signal or an output video signal.
Clause 2. The method of clause 1, further comprising,
   inputting, by the interactive virtual conference platform, one or more data sets corresponding to the plurality of contextual scenarios into one or more neural networks.
Clause 3. The method of clause 2, wherein the one or more neural networks comprises one or more of a convolutional neural network (CNN) and a recurrent neural network (RNN).
Clause 4. The method of clause 2 further comprising:
   receiving feedback on the intervention and applying the feedback to the one or more neural networks to train the one or more neural networks to apply to future interventions.
Clause 5. The method of clause 4 wherein the feedback comprises a ranking from at least one user.
Clause 6. The method of clause 5, wherein the feedback comprises a physical reaction from one or more users detected via the video or audio streams.
Clause 7. The method of clause 1, wherein the intervention comprises at least one of a change to a virtual camera angle, a shot size, and a camera motion.
Clause 8. The method of clause 1, wherein the intervention comprises one or more of changing a brightness of the output video signal, changing a tone of the output audio signal, and changing a tint of the output video signal.
Clause 9. The method of clause 1, wherein selecting, by the interactive virtual conference platform in response to detecting the contextual scenario, the intervention from the intervention database further includes selecting the intervention based on one or more user profiles.
Clause 10. The method of clause 9, wherein the one or more user profiles comprise one or more user settings correlating contextual scenarios with preselected intervention criteria.
Clause 11. A computer system comprising:
   a plurality of client-side video conferencing applications;
   an interactive video conferencing platform configured to receive one or more of a video stream or an audio stream from the plurality of client-side video conferencing applications, wherein the interactive video conferencing platform is configured to analyze the one or more video stream or audio stream and to detect a contextual scenario based on that analysis;
   an intervention database of the interactive video conferencing platform comprising a plurality of interventions, wherein, based on detecting the contextual scenario, the interactive video conferencing platform is further configured to read and implement an intervention corresponding to the contextual scenario; and
   an output signal of the interactive video conferencing platform comprising an output audio signal or an output video signal, wherein the interactive video conferencing platform is configured to modify the output signal based on the intervention corresponding to the contextual scenario.
Clause 12. The computer system of clause 11, wherein the plurality of interventions comprise changes to one or more camera views and environmental changes.
Clause 13. The computer system of clause 12, wherein the interactive video conferencing platform is further configured to receive feedback on the intervention and to apply the feedback to one or more neural networks to train the one or more neural networks to apply to future interventions.
Clause 14. The computer system of clause 11, further comprising:
   a network interface configured to receive inputs comprising one or more of typing speed, typing volume (cancellation), hand gestures, amount of speaking time, facial (micro) expressions, mouse/swipe velocity, geographic location, browser, loading time, FPS/tab focus, meeting title, number of participants, head position, language toxicity, device, or rhythms of speech, wherein the interactive video conferencing platform is configured to choose the intervention based on one or more of the inputs.
Clause 15. The computer system of clause 11, wherein
   the intervention comprises one or more of changing a brightness of the output video signal, changing a tone of the output audio signal, and changing a tint of the output video signal.
Clause 16. The computer system of clause 11,
   wherein the intervention corresponding to the contextual scenario further corresponds to on one or more user profiles.
Clause 17. The computer system of clause 16, wherein the one or more user profiles comprise one or more user settings correlating contextual scenarios with preselected intervention criteria.
Clause 18. A non-transitory computer-readable medium comprising instructions, the instructions capable of being performed on a processor, the instructions comprising:
   connect a plurality of users to a virtual conference based on a plurality of requests to join the virtual conference, wherein each session comprises one or more video or audio streams, which collectively form a plurality of video or audio streams;
   analyze the plurality of video or audio streams to detect a contextual scenario from a plurality of contextual scenarios stored in a scenario database;
   detect automatically the contextual scenario of the plurality of contextual scenarios stored in the scenario database;
   select an intervention from an intervention database based on the contextual scenario;
   read the intervention based on the contextual scenario from the intervention database; and
   intervene in the virtual conference based on the intervention read from the intervention database, wherein the intervention comprises at least one change to an output audio signal or an output video signal.
Clause 19. The non-transitory computer-readable medium of clause 18 further comprising instructions to:
   analyze one or more neural networks comprising one or more of a convolutional neural network (CNN) and a recurrent neural network (RNN), to detect the contextual scenario.
Clause 20. The non-transitory computer-readable medium of clause 18 further comprising instructions to:
   the intervention corresponding to the contextual scenario further corresponds to on one or more user profiles.

## Claims

1. A method comprising:
storing, by an interactive virtual conference platform in one or more virtual environment systems, a plurality of virtual environments;
storing, by the interactive virtual conference platform in the one or more virtual environment systems, a plurality of contextual scenarios;
storing, by the interactive virtual conference platform in the one or more virtual environment systems, a plurality of emotional cues;
receiving, at the interactive virtual conference platform, a plurality of requests to join a virtual conference;
connecting, by the interactive virtual conference platform, a plurality of sessions corresponding to the plurality of request, wherein each session comprises input data comprising at least one or more video or audio streams, which collectively form a plurality of video or audio streams;
analyzing, by a server of the interactive virtual conference platform, the plurality of video or audio streams;
detecting automatically, by the interactive virtual conference platform, a contextual scenario of the plurality of contextual scenarios or one or more emotional cues from the input data;
selecting, by the interactive virtual conference platform in response to detecting the contextual scenario or emotional cue, an intervention from an intervention database based on the analyzed input data, the detected contextual scenario or the detected one or more emotional cues;
reading, by the interactive virtual conference platform in response to detecting the contextual scenario, the intervention from the intervention database; and
intervening, by the interactive virtual conference platform, in the virtual conference based on the intervention read from the intervention database, wherein the intervention comprises at least one change to an output audio signal or an output video signal.

2. The method of claim 1, further comprising,
inputting, by the interactive virtual conference platform, one or more data sets corresponding to the plurality of contextual scenarios into one or more neural networks.

3. The method of claim 2, wherein the one or more neural networks comprises one or more of a convolutional neural network (CNN) and a recurrent neural network (RNN).

4. The method of claim 2 or claim 3, further comprising:
receiving feedback on the intervention and applying the feedback to the one or more neural networks to train the one or more neural networks to apply to future interventions.

5. The method of claim 4 wherein the feedback comprises a ranking from at least one user; and
preferably, wherein the feedback comprises a physical reaction from one or more users detected via the video or audio streams.

6. The method of any preceding claim, wherein the intervention comprises at least one of a change to a virtual camera angle, a shot size, and a camera motion; or
wherein the intervention comprises one or more of changing a brightness of the output video signal, changing a tone of the output audio signal, and changing a tint of the output video signal.

7. The method of any preceding claim, wherein selecting, by the interactive virtual conference platform in response to detecting the contextual scenario, the intervention from the intervention database further includes selecting the intervention based on one or more user profiles; and
preferably, wherein the one or more user profiles comprise one or more user settings correlating contextual scenarios with preselected intervention criteria.

8. A computer system comprising:
a plurality of client-side video conferencing applications;
an interactive video conferencing platform configured to receive one or more of a video stream or an audio stream from the plurality of client-side video conferencing applications, wherein the interactive video conferencing platform is configured to analyze the one or more video stream or audio stream and to detect a contextual scenario based on that analysis;
an intervention database of the interactive video conferencing platform comprising a plurality of interventions, wherein, based on detecting the contextual scenario, the interactive video conferencing platform is further configured to read and implement an intervention corresponding to the contextual scenario; and
an output signal of the interactive video conferencing platform comprising an output audio signal or an output video signal, wherein the interactive video conferencing platform is configured to modify the output signal based on the intervention corresponding to the contextual scenario.

9. The computer system of claim 8, wherein the plurality of interventions comprise changes to one or more camera views and environmental changes; and
preferably, wherein the interactive video conferencing platform is further configured to receive feedback on the intervention and to apply the feedback to one or more neural networks to train the one or more neural networks to apply to future interventions.

10. The computer system of claim 8 or claim 9, further comprising:
a network interface configured to receive inputs comprising one or more of typing speed, typing volume (cancellation), hand gestures, amount of speaking time, facial (micro) expressions, mouse/swipe velocity, geographic location, browser, loading time, FPS/tab focus, meeting title, number of participants, head position, language toxicity, device, or rhythms of speech, wherein the interactive video conferencing platform is configured to choose the intervention based on one or more of the inputs.

11. The computer system of any one of claims 8 to 10, wherein the intervention comprises one or more of changing a brightness of the output video signal, changing a tone of the output audio signal, and changing a tint of the output video signal.

12. The computer system of any one of claims 8 to 11, wherein the intervention corresponding to the contextual scenario further corresponds to on one or more user profiles; and
preferably, wherein the one or more user profiles comprise one or more user settings correlating contextual scenarios with preselected intervention criteria.

13. A non-transitory computer-readable medium comprising instructions, the instructions capable of being performed on a processor, the instructions comprising:
connect a plurality of users to a virtual conference based on a plurality of requests to join the virtual conference, wherein each session comprises one or more video or audio streams, which collectively form a plurality of video or audio streams;
analyze the plurality of video or audio streams to detect a contextual scenario from a plurality of contextual scenarios stored in a scenario database;
detect automatically the contextual scenario of the plurality of contextual scenarios stored in the scenario database;
select an intervention from an intervention database based on the contextual scenario;
read the intervention based on the contextual scenario from the intervention database; and
intervene in the virtual conference based on the intervention read from the intervention database, wherein the intervention comprises at least one change to an output audio signal or an output video signal.

14. The non-transitory computer-readable medium of claim 13 further comprising instructions to:
analyze one or more neural networks comprising one or more of a convolutional neural network (CNN) and a recurrent neural network (RNN), to detect the contextual scenario.

15. The non-transitory computer-readable medium of claim 13 or claim 14 further comprising instructions to:
the intervention corresponding to the contextual scenario further corresponds to on one or more user profiles.
